Europäisches Patentamt

**European Patent Office**

**Office européen des brevets**

(19)

(11) Numéro de publication : **0 077 702**
**B1**

(12)

# FASCICULE DE BREVET EUROPÉEN

(45) Date de publication du fascicule du brevet :
22.01.86

(21) Numéro de dépôt : 82401765.1

(22) Date de dépôt : 29.09.82

(51) Int. Cl.⁴ : **H 02 K 49/04, H 05 B 6/02**

(54) Convertisseur d'énergie cinétique de rotation en chaleur par génération de courants de Foucault.

(30) Priorité : 16.10.81 FR 8119468

(43) Date de publication de la demande :
27.04.83 Bulletin 83/17

(45) Mention de la délivrance du brevet :
22.01.86 Bulletin 86/04

(84) Etats contractants désignés :
BE CH DE GB IT LI NL SE

(56) Documents cités :
DE-B- 1 188 191
FR-A-   862 795
FR-A- 1 181 907
FR-A- 1 463 718
FR-A- 1 467 310
FR-A- 2 489 939
US-A- 2 566 274

(73) Titulaire : **LE MATERIEL MAGNETIQUE**
**13, rue Victor-Hugo**
**F-92800 Puteaux (FR)**

(72) Inventeur : **Cotton de Bennetot, Michel**
**34, rue de Denver**
**F-29200 Brest (FR)**

(74) Mandataire : **Marquer, Francis**
**CABINET MOUTARD 35, avenue Victor Hugo Rési-**
**dence Champfleury**
**F-78180 Voisins le Bretonneux (FR)**

### Description

La présente invention concerne un dispositif destiné à transformer en chaleur une énergie mécanique recueillie sur un arbre tournant.

Dans les applications pratiques de la dégradation en chaleur d'une énergie mécanique, un certain nombre de conditions doivent être réunies pour que cette opération s'effectue avec un bon rendement. En particulier, un convertisseur d'énergie cinétique de rotation en chaleur, s'il ne fonctionne pas à vitesse constante, doit présenter une bonne adaptation aux caractéristiques de la machine qui entraîne l'arbre primaire.

Dans une application importante de l'invention, où cette machine sera une turbine éolienne, la puissance qu'elle capte varie comme le cube de la vitesse du vent, dans les conditions de rendement optimal qui sont caractérisées par un fonctionnement à vitesse spécifique constante, celle-ci représentant le rapport de la vitesse circonférentielle du rotor à la vitesse du vent. On en déduit que le convertisseur d'énergie devrait idéalement dissiper une puissance proportionnelle au cube de la vitesse de rotation de l'arbre et, par conséquent, présenter un couple résistant proportionnel au carré de cette vitesse de rotation.

Or les génératrices électriques de type classique que l'on utilise souvent comme un convertisseur d'énergie, n'ont pas un couple qui varie avec le carré de leur vitesse de rotation. Aussi, a-t-on imaginé, pour pallier cet inconvénient, de réaliser des génératrices comportant plusieurs enroulements.

D'autres dispositifs ont été également employés antérieurement pour obtenir une loi de variation du couple du genre souhaité : il s'agit notamment de circuits hydrauliques où une hélice, entraînée par l'arbre primaire, échauffe un fluide, ainsi que de pompes associées à des orifices de perte de charge ; des dispositifs mettant en œuvre des forces de frottement à sec ont été également développés.

Par ailleurs, FR-A-2 489 939 décrit un appareil destiné à la production de chaleur dans un circuit de fluide caloporteur, à partir de l'énergie cinétique d'un arbre en rotation. Un rotor multipolaire à aimants permanents entraîné par l'arbre engendre une induction magnétique qui développe des courants de Foucault dans une pièce électroconductrice, produisant ainsi de la chaleur rcupérée par ledit circuit. Dans cet appareil, ledit circuit entoure le stator et n'en fait nullement partie intégrante, et l'agencement est tel qu'il y ait à la fois pertes par courants de Foucault et par hystérésis.

Tous les dispositifs susvisés présentent des difficultés notables de réalisation et des inconvénients.

La présente invention a pour objet un dispositif destiné à transformer l'énergie cinétique de rotation d'un arbre en chaleur récupérable par un circuit de fluide caloporteur, exempt des inconvénients des dispositifs antérieurs, particulièrement fiable et permettant de donner au couple résistant qui le caractérise une valeur variant suivant une loi prédéterminée, par exemple comme le carré de la vitesse de l'arbre d'entraînement.

Le convertisseur suivant l'invention consiste essentiellement en un rotor multipolaire à aimants permanents, un stator comportant une pièce électroconductrice soumise à l'induction magnétique engendrée par la rotation des aimants permanents et produisant ainsi un couple résistant par génération de courants de Foucault et un échangeur de chaleur et est caractérisé en ce que ladite pièce a la forme d'un manchon dans l'épaisseur duquel est formé ledit circuit de fluide caloporteur, ledit manchon constituant ainsi l'échangeur de chaleur en même temps que la pièce électroconductrice siège de courants de Foucault.

D'autres particularités, ainsi que les avantages de l'invention, apparaîtront clairement à la lumière de la description ci-après.

Au dessin annexé :

la figure 1 représente, en partie en coupe suivant I-I de la figure 2, un dispositif conforme à un mode d'exécution préféré de l'invention, dans la position où le couple résistant qu'il produit est maximal ;

la figure 2 représente ce dispositif, en partie en coupe suivant II-II de la figure 1 ;

la figure 3 est une vue analogue à celle de la figure 1 représentant le dispositif dans la position où le couple produit est minimal et, en pratique, voisin de zéro ;

la figure 4 illustre la variation du couple résistant de l'appareil en fonction de la vitesse de rotation et de la position relative des éléments qui le constituent, telle qu'elle apparaît dans les schémas des figures 5 à 8.

Le dispositif figuré comporte un rotor mécaniquement lié à l'arbre d'entraînement primaire 1. Ce dernier est par exemple constitué par l'arbre de sortie d'un multiplicateur de vitesse dont l'arbre d'entrée est l'arbre d'une turbine éolienne à axe vertical. L'arbre primaire tourne ainsi à 900 T/mn par exemple.

Le rotor est constitué par une pluralité d'aimants permanents radiaux 2 dont les faces polaires externes sont recouvertes de pièces en acier doux 3. Le rotor est avantageusement constitué par ces éléments et un enrobage en matériau moulable 4, de façon à présenter une surface extérieure cylindrique lisse. Lorsqu'il tourne, il produit une induction magnétique qui balaie l'espace qui l'entoure et est donc susceptible de créer dans cet espace, au sein de pièces en matériau à faible résistivité, des courants de Foucault. Cette propriété est mise en œuvre pour engendrer, dans les parois mêmes d'un échangeur de chaleur à l'intérieur duquel on fait circuler un fluide, des calories qui vont élever la température de ce fluide. Ledit échangeur de chaleur est constitué, dans le mode d'exécution illustré, par un boîtier cylindrique 5 dont le matériau a une faible résistivité électrique (cuivre ou alliage léger par exemple) à l'intérieur duquel est ménagé un conduit hélicoïdal 6 de façon à ce que le fluide en circulation se trouve, pendant un parcours assez long, soumis au contact de parois chaudes dont la température est liée à l'intensité de l'effet Joule produit par les courants de Foucault précisés ci-dessus. Ce fluide, qui sera par exemple de l'eau, va s'échauffer, en un temps de l'ordre de la minute, en passant d'une température voisine de 15 °C par exemple à une température comprise entre 50 et 70 °C. La circulation du fluide peut être continue.

Le boîtier 5 est avantageusement réalisé en deux parties coaxiales dont l'une 5a constitue la paroi intérieure cylindrique de l'échangeur et sa paroi annulaire supérieure, tandis que l'autre 5b constitue la paroi extérieure cylindrique de l'échangeur et sa paroi annulaire inférieure. Une culasse magnétique en acier doux 7 est avantageusement placée autour du boîtier cylindrique de l'échangeur, de façon à éviter la dispersion du champ magnétique et à augmenter ainsi son intensité au niveau de l'échangeur. Elle peut être entraînée en rotation. Dans la mesure où elle n'est pas entraînée en rotation (mode d'exécution illustré), elle est également le siège de courants de Foucault créés par l'induction tournante du rotor, mais ceux-ci sont beaucoup plus faibles que ceux produits dans les parois de l'échangeur, du fait que la résistivité de l'acier doux est beaucoup plus élevée que celle du matériau utilisé pour constituer les parois de l'échangeur. Au surplus, l'échauffement de la culasse, qui est au contact de l'échangeur, contribue à l'échauffement du fluide et n'est donc pas à l'origine d'une perte de rendement de l'appareil. L'appareil est monté entre un socle 11 et une plaque supérieure 12 reliés entre eux par trois colonnes 13, 14, 15 et par trois tiges de guidage 16, 17, 18.

Le rotor est supporté par deux roulements 19 et 20 respectivement montés dans la plaque 12 et une autre plaque fixe de support 21.

L'ensemble solidaire échangeur-culasse est monté coulissant sur les tiges 16, 17, 18, au moyen de douilles à billes telles que 22, 23.

Le déplacement dans un sens ou dans l'autre dudit ensemble le long des tiges de guidage est provoqué par un pignon 24 qui coopère avec une crémaillère 10 fixée à la culasse 7 suivant une génératrice extérieure de celle-ci.

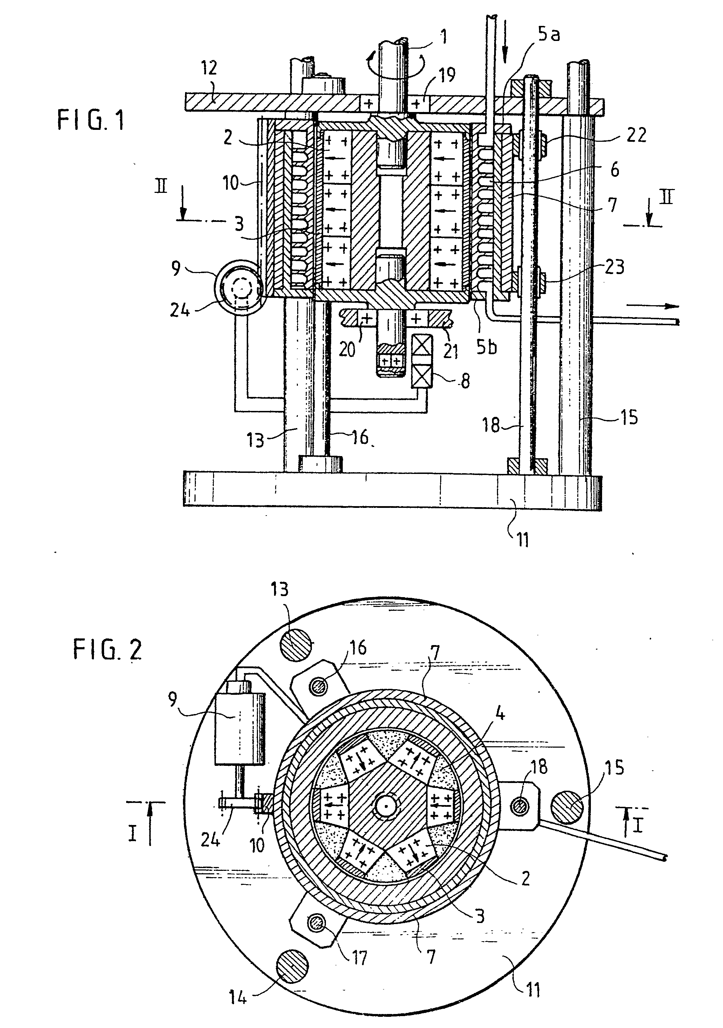

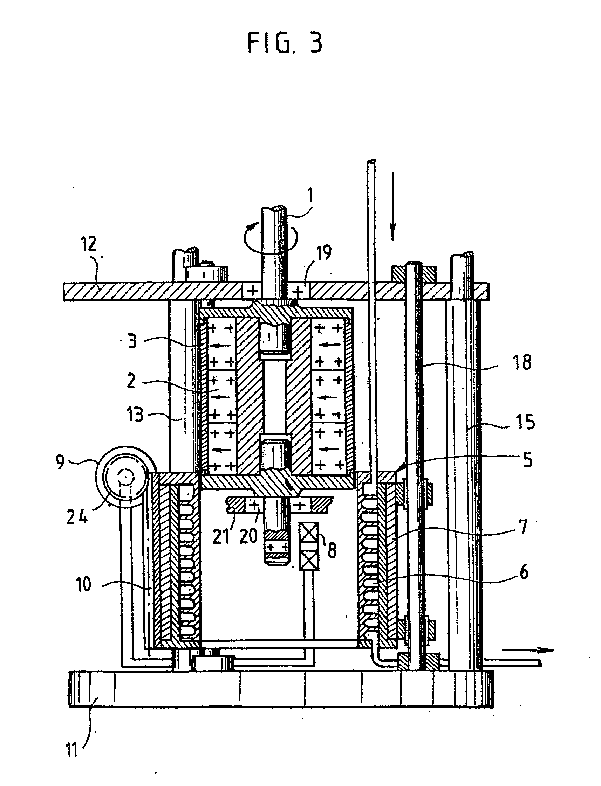

Dans la position des figures 1 et 2, l'ensemble échangeur-culasse entoure complètement le rotor et est donc soumis à la totalité de l'induction tournante engendrée par celui-ci. Par contre, dans la position de la figure 3, on voit que l'ensemble échangeur-culasse est presque entièrement situé à l'extérieur de la zone occupée par le rotor magnétique. Dans ces conditions, il est clair que les courants de Foucault engendrés dans l'échangeur seront très faibles et même pratiquement nuls ; il en sera de même du couple résistant appliqué à l'arbre primaire.

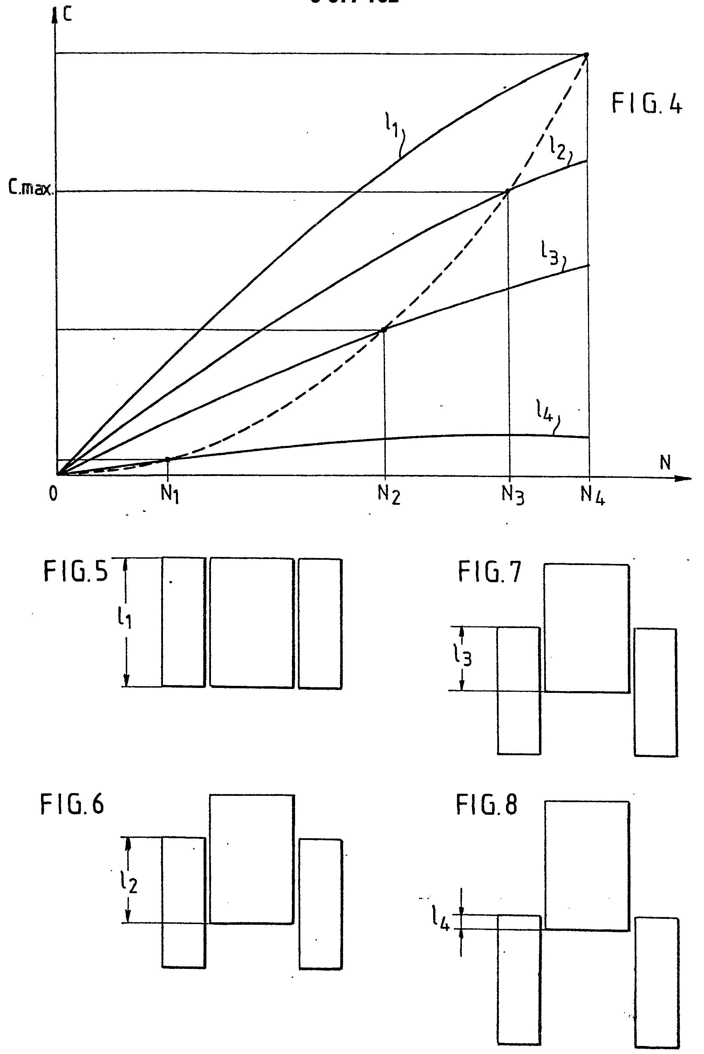

A la figure 4, on a représenté ledit couple résistant C en fonction de la vitesse de rotation, exprimée en tour-minute. La courbe $I_1$ correspond à la position relative de l'ensemble échangeur-culasse et du rotor schématisée à la figure 5 ; la courbe $I_2$, à la position schématisée à la figure 6 ; la courbe $I_3$, à la position schématisée à la figure 7 et la courbe $I_4$, à la position schématisée à la figure 8.

En déplaçant l'ensemble échangeur-culasse par rapport au rotor, parallèlement à l'axe de celui-ci, on obtient pour chaque position, une valeur du couple comprise entre 0 et la valeur maximale $C_{max}$ correspondant à la figure 1. La vitesse du rotor est mesurée par un dispositif tachymétrique 8, lequel fournit une information de commande d'un organe d'entraînement du pignon comportant un moteur électrique 9. La position de l'ensemble échangeur-culasse se trouve donc asservie à la vitesse de rotation de l'arbre primaire, la loi d'asservissement, programmée dans l'organe d'entraînement, étant telle que le couple résistant appliqué à l'arbre primaire varie entre 0 et la valeur maximale suivant une courbe définie à priori et, par exemple, variant comme le carré de la vitesse de rotation, c'est-à-dire de forme parabolique (courbe en pointillé de la figure 4).

Afin de diminuer les déperditions calorifiques, on peut avantageusement utiliser un calorifugeage de l'appareil ou, de façon plus générale, un dispositif constituant un isolant thermique placé autour de l'appareil et permettant d'employer au maximum les calories engendrées par les courants de Foucault pour échauffer le fluide circulant dans l'échangeur.

La disposition qui vient d'être décrite est du type cylindrique à symétrie de révolution. Il est évident que l'on peut envisager d'autres dispositions. Le rotor magnétique, au lieu d'avoir des pôles radiaux, pourrait être constitué de façon à créer une induction parallèle à son axe et que l'on refermerait par une pièce plane circulaire, coaxiale, située à peu de distance d'une de ses extrémités. Entre le rotor et cette pièce on pourrait disposer un échangeur où l'eau circulerait entre les deux plans qu'ils définissent.

On peut également envisager que les positions relatives du rotor et de l'échangeur de chaleur soient obtenues par le déplacement du rotor et non celui de l'échangeur, qui serait alors fixe, ou même que l'effet de variation de l'induction tournante au sein des parois de l'échangeur soit produit, non par le déplacement raltif de l'échangeur et du rotor, mais par l'insertion, entre ces pièces, d'un écran cylindrique mobile en matériau magnétique, dont le rôle serait de supprimer l'induction tournante au niveau de la partie ainsi blindée de l'échangeur.

**Revendications**

1. Dispositif destiné à transformer l'énergie cinétique de rotation d'un arbre (1) en chaleur récupérable par un circuit de fluide caloporteur, consistant essentiellement en un rotor multipolaire à aimants permanents, un stator comportant une pièce électroconductrice soumise à l'induction magnétique engendrée par la rotation des aimants permanents et produisant ainsi un couple résistant par génération de courants de Foucault et un échangeur de chaleur, caractérisé en ce que ladite pièce a la forme d'un manchon (5a-5b) dans l'épaisseur duquel est formé ledit circuit de fluide caloporteur (6), ledit manchon constituant ainsi l'échangeur de chaleur en même temps que la pièce électroconductrice siège de courants de Foucault.

2. Dispositif selon la revendication 1, caractérisé par des moyens (9, 10) de faire varier l'intensité de l'induction magnétique dans ladite paroi électroconductrice par translation progressive relative du stator et du rotor.

3. Dispositif selon la revendication 2, caractérisé en ce que le rotor est cylindrique et à pôles radiaux, tandis que ladite paroi électroconductrice (5a-5b) a la forme de deux chemises cylindriques coaxiales au rotor, délimitant entre elles ledit conduit et que ladite translation est parallèle à l'axe commun au rotor et auxdites chemises cylindriques et amène progressivement ladite paroi d'une première position extrême où elle entoure complètement le rotor à une seconde position extrême où elle est sensiblement entièrement située en dehors de la zone occupée par le rotor.

4. Dispositif selon la revendication 3, caractérisé en ce que ledit conduit est de forme hélicoïdale.

5. Dispositif selon la revendication 1, caractérisé en ce que ladite paroi électroconductrice est entourée d'une culasse (7) en matière magnétique douce.

6. Dispositif selon la revendication 2, caractérisé par des moyens (8) de mesurer la vitesse de rotation de l'arbre et des moyens d'asservissement (9) pilotés par lesdits moyens de mesure (8) et opérant ladite translation.

7. Dispositif selon la revendication 6, caractérisé en ce que ledit asservissement (9) est agencé pour obtenir une loi essentiellement parabolique de variation du couple résistant en fonction de la vitesse de rotation.

8. Application du dispositif selon la revendication 7 à la conversion en chaleur de l'énergie de rotation fournie par une éolienne ou autre machine d'entraînement de l'arbre dont la puissance varie proportionnellement au cube de la vitesse de rotation de l'arbre.

## Claims

1. Device for converting the rotational kinetic energy of a shaft (1) to heat recoverable by a heat-carrying fluid circuit, essentially consisting of a multipolar rotor having permanent magnets, of a stator having an electrically conducting part subjected to the magnetic induction generated by the rotation of the permanent magnets and thus producing a resistant couple by generation of eddy currents, and a heat exchanger, wherein said part has the form of a sleeve (5a-5b) in the thickness of which the said heat-carrying fluid (6) circuit is formed, said sleeve thus constituting the heat-exchanger at the same time as the electrically conducting part, seat of eddy currents.

2. Device according to claim 1, characterized by means (9, 10) for varying the intensity of the magnetic induction within the said electrically conducting wall by a progressive relative translation of the stator and the rotor.

3. Device according to claim 2, characterized in that the rotor is cylindrically-shaped and has radial poles, said electrically conducting wall (5a-5b) having the shape of two cylindrical sleeves which are coaxial to the rotor, and delimit the said conduit between them and that the direction of said translation is parallel to the common axis of the rotor and of said cylindrical sleeves and displaces said wall progressively from a first limit position, where it surrounds completely the rotor, to a second limit position, where it is substantially entirely located at the exterior of the zone occupied by the rotor.

4. Device according to claim 3, characterized in that said conduit is helically-shaped.

5. Device according to claim 1, characterized in that said electrically conducting wall is surrounded by a yoke (7) made of soft magnetic material.

6. Device according to claim 2, characterized by means (8) for measuring the rotational speed of the shaft and interlocking means (9) monitored by said measuring means (8) and effecting said translation.

7. Device according to claim 6, characterized in the that said interlocking means (9) are arranged for providing a substantially parabolic law of variation of the resistant couple as a function of the rotational speed.

8. The application of the device according to claim 7 to the conversion into heat of the rotational energy supplied by a wind turbine or any other machine driving the shaft whose force varies proportionally to the cube of the rotational speed of the shaft.

## Patentansprüche

1. Vorrichtung zur Umwandlung der kinetischen Drehenergie einer Welle (1) in Wärme, die durch einen Wärmeträgerflüssigkeitskreislauf rückgewonnen werden kann, der im wesentlichen besteht aus einem Vielpolrotor mit ständigen Magneten, einem Stator mit einem elektrisch leitenden Teil, das der von der Rotation der ständigen Magneten erzeugten magnetischen Induktion unterworfen ist und so, durch Erzeugung von Wirbelströmen, ein Gegenmoment erzeugt, sowie einem Wärmeaustauscher, dadurch gekennzeichnet, dass besagtes Teil die Form eines Stutzens (5a-5b) hat, in dessen Wanddicke besagter Wärmeträgerflüssigkeitskreislauf (6) gebildet wird, wobei besagter Stutzen auf diese Weise zugleich der Wärmeaustauscher und das elektrisch leitende Teil, Sitz der Wirbelströme, ist.

2. Vorrichtung nach Anspruch 1, gekennzeichnet durch Mittel (9, 10) zur Variierung der Intensität der magnetischen Induktion in besagter elektrisch leitender Wand durch allmähliche relative Translation des Stators und des Rotors.

3. Vorrichtung nach Anspruch 2, dadurch gekennzeichnet, dass der Rotor sylindrisch und mit strahlenförming angeordneten polen ausgebildet ist, während besagte elektrisch leitende Wand (5a-5b) die Form von zwei zylindrischen zum Rotor koaxialen Hüllen hat, zwischen denen besagter Kreislauf entlangführt und dass besagte Translation parallel zur gemeinsamen Achse des Rotors und besagten zylindrischen Hüllen stattfindet und besagte Wand allmählich aus einer ersten Endposition, in der sie den Rotor völlig umgibt, in eine zweite Endposition geführt wird, in der sie sich im wesentlichen völlig ausserhalb der vom Rotor eingenommenen Zone befindet.

4. Vorrichtung nach Anspruch 3, dadurch gekennzeichnet, dass besagter Kreislauf spiralförmig verläuft.

5. Vorrichtung nach Anspruch 1, dadurch gekennzeichnet, dass besagte elektrisch leitende Wand durch ein Joch (7) aus weichem magnetischem Material umgeben ist.

6. Vorrichtung nach Anspruch 2, gekennzeichnet durch Mittel (8), um die Drehgeschwindigkeit der Welle zu messen und durch, von besagten Messungsmitteln (8) gesteuerte Regelungsmittel (9) welche besagte Translation bewirken.

7. Vorrichtung nach Anspruch 6, dadurch gekennzeichnet, dass besagte Regelungsmittel (9) so angeordnet sind, dass man im Verhältnis zur Drehgeschwindigkeit ein im wesentlichen parabolisches Gesetz zur Variierung des Gegenmomentes erhält.

8. Anwendung der Vorrichtung nach Anspruch 7, um die von einer Windturbine oder einer anderen Antriebsmaschine für die Welle gelieferte Drehenergie, deren Leistung sich proportional sur Kubikzahl der Drehgeschwindigkeit der Welle ändert, in Wärme zu verwandeln.

FIG. 1

FIG. 2

FIG. 3

FIG. 4

FIG.5

FIG.7

FIG.6

FIG.8